# EUROPEAN PATENT SPECIFICATION

(11) **EP 0 993 752 B1**
(45) Date of publication and mention of the grant of the patent: **18.08.2004**
(21) Application number: 98924333.2
(22) Date of filing: 01.06.1998
(51) Int. Cl.: H04Q 7/38

(54) **A METHOD OF HANDOVER IN A COMMUNICATION SYSTEM, SUCH A SYSTEM AND A BASE STATION CONTROLLER**
VERFAHREN ZUM WEITERREICHEN IN EINEM KOMMUNIKATIONSSYSTEM, EIN DERARTIGES SYSTEM UND EIN BASE STATION CONTROLLER
TRANSFERT INTERCELLULAIRE DANS UN SYSTEME DE COMMUNICATION, SYSTEME UTILISE ET CONTROLEUR DE STATIONS DE BASE

(30) Priority: 05.06.1997 FI 972396
(43) Date of publication of application: 19.04.2000
(73) Proprietor: Nokia Corporation, 02150 Espoo (FI)
(72) Inventor: LEMPIÄINEN, Jukka, FIN-00940 Helsinki (FI)
(74) Representative: Ruuskanen, Juha-Pekka
(86) International application number: PCT/FI1998/000464
(87) International publication number: WO 1998/058515

(56) References cited:
- WO-A-95/35007
- GB-A- 2 295 943

## Description

### Field of the invention

The present invention relates to a method of handover in a mobile communications system including base transceiver stations and mobile stations, which establish a radio connection with the base transceiver stations, with the mobile stations being assigned to subscriber classes such that some of the mobile stations are assigned to one subscriber class and some to at least one other subscriber class.

In addition, the invention relates to a mobile communications system and a base station controller.

### Technical background

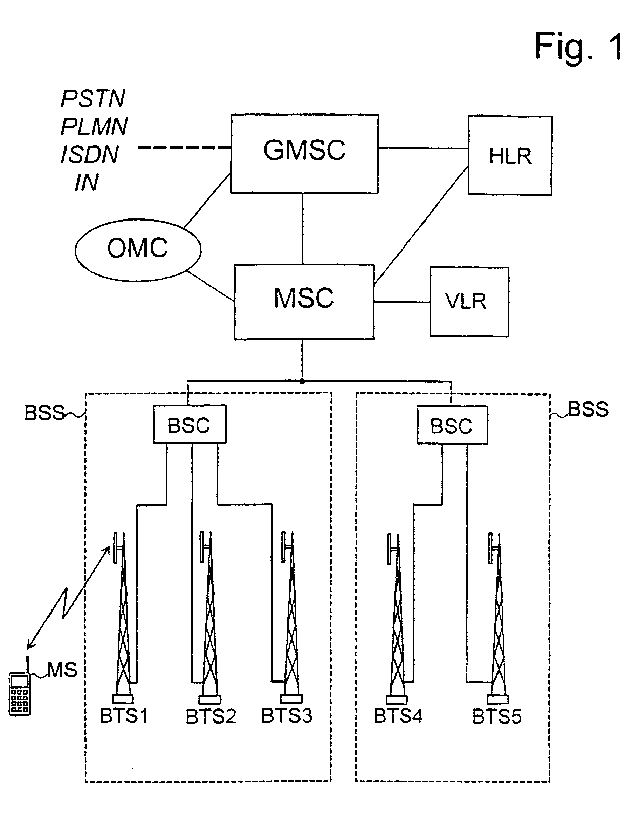

Figure 1 in the enclosed drawing shows a simplified block diagram of the pan-European GSM mobile communications system. The mobile station MS is connected over a radio path to one base transceiver station BTS, in the case illustrated in Figure 1 to the base transceiver station BTS1. The base transceiver stations BTS continuously transmit on broadcasting channels information about themselves intended for all mobile stations MS, such as cell identity CI, information on the neighbouring cells, and the location area identifier LAI. The base station system BSS consists of a base station controller BSC and of base transceiver stations BTS controlled by the BSC.. Usually, several base station controllers BSC operate under one mobile services switching centre MSC. A mobile services switching centre MSC is connected to other mobile services switching centres and, via the gateway mobile services switching centre GMSC, the GSM network gains access to other networks, such as the public services telephone network PSTN, another public land mobile network PLMN or the ISDN network ISDN. Operation of the entire system is monitored by the operation and maintenance centre OMC. Information on the mobile station MS subscriber is permanently stored in the home location register HLR and temporarily in the visitor location register VLR of the area where the mobile station MS is located at each time.

In cellular mobile communications systems, the mobile station may roam freely within the area of the mobile communications network and connect to the best base transceiver station signal available. An attempt is then made to connect all mobile-originated and mobile-terminated calls via the base transceiver station BTS transmitting the strongest signal. Usually, all the base transceiver stations offer an essentially identical service for the mobile stations in the network. However, a number of base transceiver stations can, by means of a cell barring parameter, be defined as accessible only to mobile stations of a particular subscriber class, for example for use by test users. Using the cell barring parameter, it is possible to block the set-up of a call originating from mobile stations other than those of the class with access to the base transceiver station involved. In the GSM mobile communications system, the cell barring parameter is transmitted on the broadcasting channel of the base transceiver station in the form of the CELL_BAR_ACCESS parameter, which is used, for example, during maintenance of the base transceiver station or at base transceiver station in test use.

A mobile station MS continuously measures the nearest base transceiver stations BTS for the best signal or in preparation for potential cell change-over. In the GSM mobile communications system, for example, a mobile station MS is able to measure the level and quality of the signal from the serving base transceiver station while simultaneously measuring a maximum of 32 other base transceiver stations for signal level. The mobile station MS regularly transmits a measurement report containing the results of the measurements for the serving base transceiver station and for a maximum of the six best neighbouring base transceiver stations via the serving base transceiver station BTS1 to the base station controller BSC, which makes the decision on handover.

In a cellular mobile communications system, radio coverage is achieved by several slightly overlapping radio cells. When a mobile station passes from one cell to another, handover to the base transceiver station of the new cell will take place based on predetermined handover criteria. Where possible, handover is effected in a way that least interferes with the on-going telephone call. Usually, handover from a traffic channel to another or from a signalling channel to another is carried out when the criteria for handover defined by the operator are satisfied. A directed retry may also be construed as a handover when, during call set-up, the traffic channel is selected from a cell other than the cell where signalling was carried out.

A handover is normally effected when the handover criteria defined for the radio path are satisfied but it can be carried out for other reasons as well, for example in order to redistribute load or reduce transmission power. The handover criteria include low signal level and/or quality of the currently serving cell or the availability of a better signal level or quality in the neighbouring cell. In addition, a priority list of neighbouring cells can also be defined specifically for each base transceiver station BTS, specifying one or several of the base transceiver stations as primary cells for handover. If so, handover will be effected to the priority cells providing that the signal is adequate for maintaining the radio contact. WO 95/35007 discloses a handover method, wherein the target cell for the handover is selected additionally based on the transmission power class of the mobile station and the cell type of the neighbouring cells.

The problem with known handover procedures is that handover of all mobile stations can also be effected to base transceiver stations for which a barring parameter has been set. For example, mobile stations other than those used for testing can be switched to a base transceiver station being tested, which complicates the testing of such a base transceiver station as a result of interference from other traffic. A base transceiver station intended for restricted use can be omitted from the list of neighbouring base transceiver stations to ensure that no attempt is made to connect to this base transceiver station by way of handover. However, the problem remains that, if both the base transceiver station and the mobile stations are being tested, then handover of the mobile stations cannot be tested because the base transceiver station, while being tested, is blocked for handovers of all mobile stations.

### A brief summary of the invention

The idea of the present invention is to restrict subscriber handover to base transceiver stations intended for special uses, such as testing.

This objective is accomplished by employing a method and a mobile communications system in accordance with the present invention characterised by features described in the independent patent claims 1 and 7. Particular embodiments of the invention are presented in the dependent patent claims.

The base station controller to which this invention relates is characterised by the independent patent claim 8.

The invention is based on the idea that authorised subscriber classes are defined for a base transceiver station specifying the user categories for which handover to that particular base transceiver station is allowed. As a result, handover of mobile stations to a base transceiver station is prevented if the subscriber class of the mobile station is not defined for that particular base transceiver station. Thus, the subscriber class of the mobile station is introduced as an additional criterion for handover. For example, handover to a base transceiver station that is being tested is only possible for mobile stations defined for test use.

One of the advantages of such handover is that handover can be tested to and from the test base transceiver station, for example between micro and macro cells, without making the test base transceiver station available for commercial use. This makes it possible to test new cells and optimise their radio parameters during the test operation before giving access to normal paying subscribers.

Another advantage of handover in accordance with the present invention is that the testing of a new cell will not interfere with the operation of the network, as normal users are not offered any service by the cells being tested.

An additional advantage offered by the invention is that new cells can be subjected to a load by test users in controlled testing conditions without interference from normal traffic.

### List of drawings

The invention is explained in greater detail in connection with preferred embodiments with reference to the following drawings, of which:
- Figure 1: illustrates sections of a mobile communications network that are essential to the invention;
- Figure 2: illustrates an example of the cellular structure of the radio network;, and
- Figure 3: represents the handover method in accordance with the invention in the form of a flow chart.

### A detailed description of the invention

The present invention can be used for any mobile communications system. The invention is described in detail below by primarily using examples based on the pan-European digital GSM mobile communications network. Figure 1 illustrates the structure of the GSM network in a simplified form referred to above. For a more detailed description of the GSM system, reference is made to the GSM recommendations and the book "The GSM System for Mobile Communications", M. Mouly & M. Pautet, Palaiseau, France, 1992, ISBN:2-9507190-0-7.

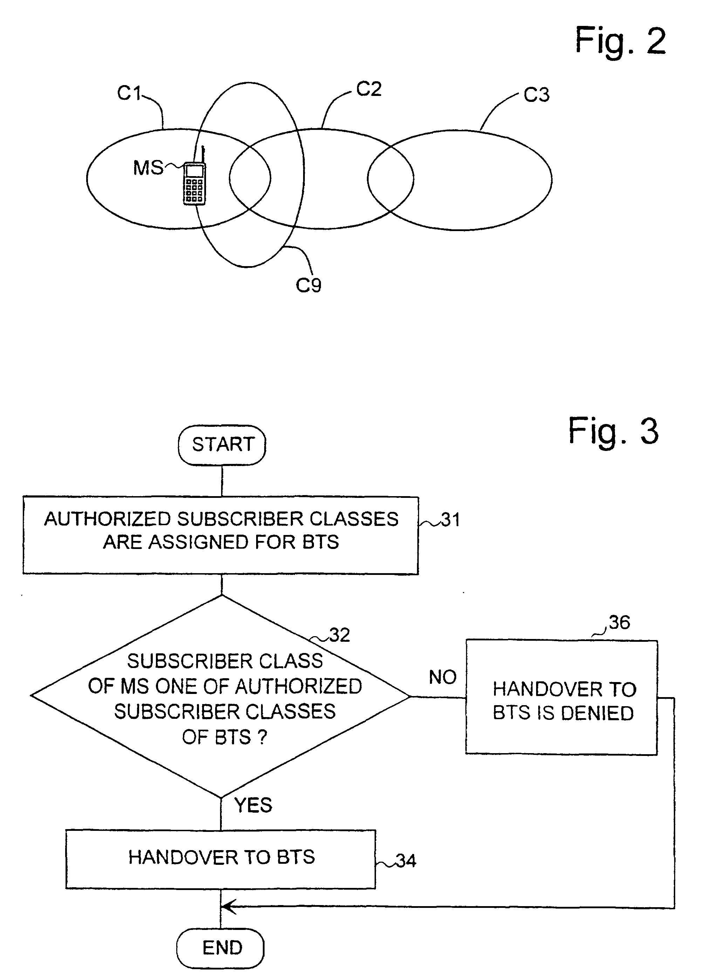

The invention is explained in more detail below in the light of its first embodiment with reference to Figures 2 and 3.

Figure 2 shows an example of the cellular structure of a radio network. In cells C1, C2 and C3, no specific restrictions for access by various user groups have been defined for base transceiver stations BTS1, BTS2 and BTS3 (not shown in the Figure). Any mobile station MS registered in the mobile communications system can connect to base transceiver stations BTS1, BTS2 and BTS3 and set up a call via these base transceiver stations or connect to the radio channels of these base transceiver stations by means of handover. For base transceiver station BTS9 (not shown in the Figure) in cell C9, the CELL_BAR_ACCESS parameter is enabled. Restricted handover in accordance with the present invention, based on the subscriber class that the mobile station involved is assigned to, has also been defined for the base transceiver station BTS9. When the mobile station MS moves from cell C1 to cell C9, measurements show that the signal from the base transceiver station BTS9 is more favourable for radio connection than the signal from BTS1. If no call is in progress on the mobile station MS, it will make an attempt to initiate any call set-up through the base transceiver station BTS9. If the mobile station MS does not belong to any authorised subscriber category, such as test users, the CELL_BAR_ACCESS parameter will prevent, in accordance with the state of the art, the set-up of a call via the base transceiver station BTS9. If a call is in progress when the mobile station MS moves into the area of base transceiver station BTS9, handover in accordance with the present invention is carried out as explained below.

Figure 3 shows the handover method in accordance with the invention in the form of a flow chart. In Figure 3, item 31, authorised subscriber classes are defined for the base transceiver station BTS, BTS9 in the case of Figure 2, to allow or deny handover of calls to this particular base transceiver station. The authorised subscriber classes are defined for the base transceiver station involved by preferably entering them in a list of neighbouring cells using the subscriber categories currently in use in the mobile communications network in accordance with the state of the art, such as the PIE (Priority Information Element) subscriber class. To accomplish this, authorised subscriber classes for which handover to the base transceiver station is allowed can be defined in the base transceiver station data, such as the list of neighbouring cells, or, alternatively, the unauthorised subscriber classes for which access by means of handover is denied, in which case the handover is allowed for all classes other than those entered in the list of unauthorised subscriber classes. One or several such subscriber classes can be defined in the base transceiver station data. When the mobile station moves while a call is in progress, the need for handover is monitored in the mobile communications network, e.g. in the base station controller BSC, based on the results of measurements in accordance with the state of the art. When the mobile station MS moves from cell C1 area to cell C9 area, the base station controller BSC detects from the results of the measurements that a better signal level or quality is available from a cell other than the current serving cell, for example. The base station controller BSC determines that handover to the base transceiver station BTS9 is advantageous. In accordance with the present invention, prior to handover to the base transceiver station to which access is restricted with regard to handover, the base station controller BSC compares the subscriber class of the mobile station MS, such as the PIE subscriber class entered in the subscriber data of the mobile station, with the subscriber classes authorised for handover to the base transceiver station BTS9 (item 32). If the subscriber class of the mobile station MS is among the classes with access to the base transceiver station BTS9, handover of the call in progress at the mobile station MS is effected to the base transceiver station BTS9 (item 34). If the subscriber class of the mobile station MS involved is not allowed for the base transceiver station BTS9, no handover will take place; instead, access of the mobile station MS to the base transceiver station BTS9 is denied (item 36). Moreover, it is possible to define, in the base station controller, a quarantine period during which no handover of the mobile station to this particular base transceiver station will be attempted, if handover is barred in accordance with the present invention.

Thus, in the handover procedure in accordance with the present invention, the subscriber class of the mobile station is introduced as an additional handover criterion, when such a restriction is set for the base transceiver station of the target cell for handover. A method of handover in accordance with the present invention is only effected when the subscriber class access restriction is enabled on the base transceiver station involved. As a result, handover in accordance with the present invention can be effected in such a way that it only concerns some of the base transceiver stations in the network. If necessary, subscriber classes for handover may be defined for all base transceiver stations and the access restriction activated using a suitable parameter. When the said parameter is enabled, subscriber classes will be checked in response to a handover request to the base transceiver station in accordance with the present invention.

In another embodiment of the invention, handover can be effected by having the base station controller first compare the subscriber class of the mobile station with the authorised subscriber classes defined for the base transceiver station and, if the base transceiver station involved allows handover for the particular mobile station MS involved, the base station controller would only then check for other handover criteria, such as a better signal level, better quality or lower transmission power.

Handover in accordance with the present invention is also suitable for directed retry, when a radio channel suitable for radio connection is found in the call set-up phase in a base transceiver station other than the station where the call set-up signalling was carried out. This makes it possible to speed up the transfer of calls of authorised mobile stations to the traffic channel of a special base transceiver station during call set-up. This procedure is particularly beneficial when the base transceiver station, which took care of the call set-up signalling, is under a heavy load.

The functions associated with the present invention are located, for example, in the unit making the handover decision in the mobile communications network, preferably in the base station controller BSC. The mobile communications system in accordance with the invention includes the means for defining the subscriber classes for handover, comparison means for comparing the subscriber class of the mobile station with those subscriber classes with access to the base transceiver station, and restriction means responsive to the comparison means for preventing handover to the base transceiver station involved, if the subscriber class of the mobile station concerned is not among those subscriber classes with access to the base transceiver station.

The drawings and related description is intended only for the purpose of illustrating the idea of the invention. With regard to details, handover in accordance with the present invention may vary within the scope of the patent claims. Although the invention is explained above mainly with reference to a base transceiver station used for testing, the method may also be used for other restricted-access purposes of base transceiver stations.

## Claims

1. A method of handover in a mobile communications system including base transceiver stations (BTS) and mobile stations (MS) which establish a radio connection with the base transceiver stations and for which a subscriber class is assigned based on properties other than those of the mobile terminal in such a way that some of the mobile stations belong to one subscriber class and some to at least one other subscriber class, where signals from the base transceiver stations are measured by the mobile station (MS), the signal level and quality of a radio connection is measured at the base transceiver station (BTS), a need for handover is determined and a target base transceiver station for handover is selected based on the results of the said measurements, **characterized in that** in this method
at least one subscriber class is defined for at least one base transceiver station (BTS9) to serve as the subscriber class for handover, and
handover to the said base transceiver station (BTS9) is only allowed for those mobile stations (MS), whose subscriber class is one of the handover subscriber classes defined for the base transceiver station involved (BTS9).

2. A method in accordance with patent claim 1, characterized in that
at least one authorised subscriber class is defined for at least one base transceiver station (BTS9),
the subscriber class of the mobile station is compared with authorised subscriber classes defined for the base transceiver station, and
handover to the said base transceiver station (BTS9) takes place when the subscriber class of the mobile station involved is one of the authorised subscriber classes specified for the said base transceiver station.

3. A method in accordance with patent claim 1, characterized in that
at least one unauthorised subscriber class is defined for at least one base transceiver station (BTS9)
the subscriber class of the mobile station is compared with the unauthorised subscriber classes specified for the base transceiver station and
handover to the said base transceiver station (BTS9) takes place when the subscriber class of the mobile station involved is not one of the unauthorised subscriber classes specified for the base transceiver station.

4. A method in accordance with any of the patent claims 1, 2 or 3, **characterized in that** handover of the mobile station (MS) to the said base transceiver station (BTS9) is prevented for a pre-set quarantine time defined for the base transceiver station involved as of the time when it is determined that the subscriber class of the mobile station is not one of those authorised for handover to the base transceiver station (BTS9) involved.

5. A method in accordance with patent claim 1, **characterized in that** a parameter is enabled on the base transceiver station (BTS9) to acknowledge subscriber class as a handover criterion.

6. A method in accordance with any of the patent claims 1 through 5, **characterized in that** the subscriber class is indicated by means of PIE (Priority Information Element).

7. A mobile communications system including base transceiver stations (BTS) and mobile stations (MS) which establish radio connection with the base transceiver stations and for which a subscriber class is defined based on properties other than those of the mobile terminal in such a way that some of the mobile stations belong to one subscriber class and some to at least one other subscriber class, the said mobile communications system being arranged to measure the signals from the base transceiver stations at the mobile station (MS) , to measure the signal level and quality of a radio connection established at the base transceiver station (BTS), to determine a need for handover and to select a target base transceiver station for handover based on the results of the said measurements, **characterized in that**, in addition, the mobile communication system is arranged
to assign subscriber classes to at least one base transceiver station for handover purposes,
to compare subscriber classes of a mobile station with those specified for the base transceiver station for handover purposes and
to allow handover of the mobile station to the said base transceiver station only if the subscriber class of the mobile station is one of those authorised for handover to the base transceiver station involved.

8. A base station controller with at least one base transceiver station (BTS) operating under it and including means for determining the need for handover and means for selecting a target base transceiver station for handover, **characterized in that** it also includes means for assigning subscriber classes for handover to the base transceiver station based on properties other than those of the mobile terminal, comparison means for comparing the subscriber class of the mobile station with the subscriber classes for handover defined for the base transceiver station and restriction means responsive to the comparison means for preventing handover to the base transceiver station involved, if the subscriber class of the mobile station is not one of the subscriber classes authorised for handover specified for the base transceiver station involved.

## Patentansprüche

1. Verbindungsübergabe-Verfahren in einem Mobil-Kommunikationssystem, das Basis-Sender/Empfänger-Stationen (BTS) und Mobilstationen (MS) aufweist, die eine Funkverbindung mit den Basis-Sender/Empfänger-Stationen aufbauen, und für die, basierend auf anderen Eigenschaften als denen der mobilen Endeinrichtung, eine Teilnehmerklasse derart zugewiesen ist, dass einige der Mobilstationen zu einer Teilnehmerklasse und einige zu zumindest einer anderen Teilnehmerklasse gehören, wobei Signale von den Basis-Sender/Empfänger-Stationen durch die Mobilstationen (MS) gemessen werden, der Signalpegel und die Qualität einer Funkverbindung an der Basis-Sender/Empfänger-Station (BTS) gemessen werden, ein Bedarf für eine Verbindungsübergabe bestimmt wird und, basierend auf den Ergebnissen der Messungen, eine Ziel-Basis-Sender/Empfänger-Station zur Verbindungsübergabe ausgewählt wird, **dadurch gekennzeichnet, dass** bei diesem Verfahren
zumindest eine Teilnehmerklasse für zumindest eine Basis-Sender/Empfänger-Station (BTS9) definiert ist, um als die Teilnehmerklasse zur Verbindungsübergabe zu dienen, und
eine Verbindungsübergabe zur Basis-Sender/Empfänger-Station (BTS9) nur für die Mobilstationen (MS) zulässig ist, deren Teilnehmerklasse eine der Verbindungsübergabe-Teilnehmerklassen ist, die für die beteiligte Basis-Sender/Empfänger-Station (BTS9) definiert sind.

2. Verfahren gemäß Anspruch 1, **dadurch gekennzeichnet, dass**
zumindest eine autorisierte Teilnehmerklasse für zumindest eine Basis-Sender/Empfänger-Station (BTS9) definiert ist,
die Teilnehmerklasse der Mobilstation mit autorisierten Teilnehmerklassen, die für die Basis-Sender/Empfänger-Station definiert sind, verglichen wird, und
eine Verbindungsübergabe zur Basis-Sender/Empfänger-Station (BTS9) stattfindet, wenn die Teilnehmerklasse der beteiligten Mobilstation eine der autorisierten Teilnehmerklassen ist, die für die Basis-Sender/Empfänger-Station spezifiziert sind.

3. Verfahren gemäß Anspruch 1, **dadurch gekennzeichnet, dass**
zumindest eine nicht-autorisierte Teilnehmerklasse für zumindest eine Basis-Sender/Empfänger-Station (BTS9) definiert ist,
die Teilnehmerklasse der Mobilstation mit den nichtautorisierten Teilnehmerklassen, die für die Basis-Sender/Empfänger-Station spezifiziert sind, verglichen wird, und
eine Verbindungsübergabe zur Basis-Sender/Empfänger-Station (BTS9) stattfindet, wenn die Teilnehmerklasse der beteiligten Mobilstation nicht eine der nichtautorisierten Teilnehmerklassen ist, die für die Basis-Sender/Empfänger-Station spezifiziert sind.

4. Verfahren gemäß einem der Ansprüche 1, 2 oder 3, **dadurch gekennzeichnet, dass** eine Verbindungsübergabe von der Mobilstation (MS) zur Basis-Sender/Empfänger-Station (BTS9) für eine vorgegebene Sperrzeit verhindert wird, die für die beteiligte Basis-Sender/Empfänger-Station ab der Zeit definiert ist, zu der bestimmt wird, dass die Teilnehmerklasse der Mobilstation nicht eine derjenigen ist, die für Verbindungsübergaben zur beteiligten Basis-Sender/Empfänger-Station (BTS9) autorisiert sind.

5. Verfahren gemäß Anspruch 1, **dadurch gekennzeichnet, dass** ein Parameter bei der Basis-Sender/Empfänger-Station (BTS9) für die Anerkennung einer Teilnehmerklasse als ein Verbindungsübergabe-Kriterium aktiviert ist.

6. Verfahren gemäß einem der Ansprüche 1 bis 5, **dadurch gekennzeichnet, dass** die Teilnehmerklasse durch ein PIE (Prioritäts-Informationselement) angegeben ist.

7. Mobil-Kommunikationssystem, das Basis-Sender/Empfänger-Stationen (BTS) und Mobilstationen (MS) aufweist, die eine Funkverbindung mit den Basis-Sender/Empfänger-Stationen aufbauen, und für die, basierend auf anderen Eigenschaften als denen der mobilen Endeinrichtung, eine Teilnehmerklasse derart definiert ist, dass einige der Mobilstationen zu einer Teilnehmerklasse und einige zu zumindest einer anderen Teilnehmerklasse gehören, wobei das Mobil-Kommunikationssystem anpasst ist, um die Signale von den Basis-Sender/Empfänger-Stationen bei den Mobilstationen (MS) zu messen, den Signalpegel und die Qualität einer aufgebauten Funkverbindung an der Basis-Sender/Empfänger-Station (BTS) zu messen, einen Bedarf für eine Verbindungsübergabe zu bestimmen und, basierend auf den Ergebnissen der Messungen, eine Ziel-Basis-Sender/Empfänger-Station für Verbindungsübergaben auszuwählen, **dadurch gekennzeichnet, dass** das Mobil-Kommunikationssystem zudem dazu angepasst ist, um
zumindest einer Basis-Sender/Empfänger-Station Teilnehmerklassen für Verbindungsübergabe-Zwecke zuzuweisen,
Teilnehmerklassen einer Mobilstation mit denen zu vergleichen, die für die Basis-Sender/Empfänger-Station für Verbindungsübergabe-Zwecke spezifiziert sind, und
eine Verbindungsübergabe der Mobilstation zur Basis-Sender/Empfänger-Station nur dann zuzulassen, falls die Teilnehmerklasse der Mobilstation eine derjenigen ist, die für Verbindungsübergaben zur beteiligten Basis-Sender/Empfänger-Station autorisiert sind.

8. Basisstations-Steuerung mit zumindest einer Basis-Sender/Empfänger-Station (BTS), die unter dieser arbeitet, und die eine Einrichtung zur Bestimmung des Bedarfs an einer Verbindungsübergabe und eine Einrichtung zur Auswahl einer Ziel-Basis-Sender/Empfänger-Station zur Verbindungsübergabe aufweist, **dadurch gekennzeichnet,**
**dass** sie auch eine Einrichtung zur Zuweisung, basierend auf anderen Eigenschaften als denen der mobilen Endeinrichtung, von Teilnehmerklassen für Verbindungsübergaben zur Basis-Sender/Empfänger-Station, eine Vergleichsvorrichtung zum Vergleich der Teilnehmerklasse der Mobilstation mit den Teilnehmerklassen für Verbindungsübergaben, die für die Basis-Sender/Empfänger-Station definiert sind, und eine Restriktionseinrichtung aufweist, die auf die Vergleichsvorrichtung anspricht, um Verbindungsübergaben zur beteiligten Basis-Sender/Empfänger-Station zu verhindern, falls die Teilnehmerklasse der Mobilstation nicht eine der für Verbindungsübergaben autorisierten Teilnehmerklassen ist, die für die beteiligte Basis-Sender/Empfänger-Station spezifiziert sind.

## Revendications

1. Procédé de transfert dans un système de télécommunication mobile comprenant des stations d'émission/réception de base (BTS) et des stations mobiles (MS) qui établissent une liaison radioélectrique avec les stations d'émission/réception de base et auxquelles une catégorie d'abonnés est affectée d'après des propriétés autres que celles du terminal mobile de telle manière que certaines des stations mobiles appartiennent à une première catégorie d'abonnés et certaines à au moins une autre catégorie d'abonnés, les signaux venant des stations d'émission/réception de base étant mesurés par la station mobile (MS), le niveau et la qualité des signaux d'une liaison radioélectrique étant mesurés dans la station d'émission/réception de base (BTS), une nécessité de transfert étant déterminée et une station d'émission/réception de base cible pour un transfert étant sélectionnée d'après les résultats desdites mesures, **caractérisé en ce que**, dans ce procédé,
au moins une catégorie d'abonnés est définie pour au moins une station d'émission/réception de base (BTS9) afin de servir de catégorie d'abonnés pour le transfert, et
le transfert vers ladite station d'émission/réception de base (BTS9) est autorisé uniquement pour les stations mobiles (MS) dont la catégorie d'abonnés est l'une des catégories d'abonnés à transferts définies pour la station d'émission/réception de base concernée (BTS9).

2. Procédé selon la revendication 1, **caractérisé en ce que**
au moins une catégorie d'abonnés habilitée est définie pour au moins une station d'émission/réception de base (BTS9),
la catégorie d'abonnés de la station mobile est comparée avec les catégories d'abonnés habilitées définies pour la station d'émission/réception de base, et
le transfert vers ladite station d'émission/réception de base (BTS9) se produit lorsque la catégorie d'abonnés de la station mobile concernée est l'une des catégories d'abonnés habilitées spécifiées pour ladite station d'émission/réception de base.

3. Procédé selon la revendication 1, **caractérisé en ce que**
au moins une catégorie d'abonnés non habilitée est définie pour au moins une station d'émission/réception de base (BTS9),
la catégorie d'abonnés de la station mobile est comparée avec les catégories d'abonnés non habilitées spécifiées pour la station d'émission/réception de base, et
le transfert vers ladite station d'émission/réception de base (BTS9) se produit lorsque la catégorie d'abonnés de la station mobile concernée n'est pas l'une des catégories d'abonnés non habilitées spécifiées pour la station d'émission/réception de base.

4. Procédé selon l'une quelconque des revendications 1, 2 et 3 **caractérisé en ce que** le transfert de la station mobile (MS) vers ladite station d'émission/réception de base (BTS9) est empêché pendant une durée de quarantaine préétablie définie pour la station d'émission/réception de base concernée dès qu'il est déterminé que la catégorie d'abonnés de la station mobile n'est pas une de celles habilitées pour le transfert vers la station d'émission/réception de base (BTS9) concernée.

5. Procédé selon la revendication 1, **caractérisé en ce qu'**un paramètre est validé dans la station d'émission/réception de base (BTS9) pour reconnaître la catégorie d'abonnés comme critère de transfert.

6. Procédé selon l'une quelconque des revendications 1 à 5, **caractérisé en ce que** la catégorie d'abonnés est indiquée à l'aide d'un EIP (Elément d'Information de Priorité).

7. Système de télécommunications mobile comprenant des stations d'émission/réception de base (BTS) et des stations mobiles (MS) qui établissent une liaison radioélectrique avec les stations d'émission/réception de base et pour lesquelles une catégorie d'abonnés est définie d'après des propriétés autres que celles du terminal mobile de telle manière que certaines des stations mobiles appartiennent à une première catégorie d'abonnés et certaines à au moins une autre catégorie d'abonnés, ledit système de télécommunications mobile étant conçu pour mesurer dans la station mobile (MS) les signaux émis par les stations d'émission/réception de base, pour mesurer dans la station d'émission/réception de base (BTS) le niveau et la qualité des signaux d'une liaison radioélectrique établie, pour déterminer la nécessité d'un transfert et sélectionner une station d'émission/réception de base visée pour le transfert d'après les résultats desdites mesures, **caractérisé en ce que**, en outre, le système de télécommunications mobile est conçu
pour attribuer des catégories d'abonnés à au moins une station d'émission/réception de base à des fins de transferts,
pour comparer les catégories d'abonnés d'une station mobile avec celles spécifiées pour la station d'émission/réception de base à des fins de transferts, et
pour permettre le transfert de la station mobile vers ladite station d'émission/réception de base uniquement si la catégorie d'abonnés de la station mobile est l'une de celles habilitées pour le transfert vers la station d'émission/réception de base concernée.

8. Contrôleur de station de base faisant fonctionner au moins une station d'émission/réception de base (BTS) et comportant des moyens pour déterminer la nécessité d'un transfert et des moyens pour sélectionner une station d'émission/réception de base visée pour un transfert, **caractérisé en ce qu'**il comprend également des moyens pour attribuer des catégories d'abonnés pour un transfert vers la station d'émission/réception de base d'après des propriétés autres que celles du terminal mobile, des moyens de comparaison pour comparer la catégorie d'abonnés de la station mobile avec les catégories d'abonnés pour transfert définies pour la station d'émission/réception de base, et des moyens de restriction réagissant aux moyens de comparaison pour empêcher le transfert vers la station d'émission/réception de base concernée, si la catégorie d'abonnés de la station mobile n'est pas une des catégories d'abonnés autorisées pour le transfert défini pour la station d'émission/réception de base concernée.
